# EUROPEAN PATENT APPLICATION

(11) **EP 4 691 651 A1**
(43) Date of publication of application: **11.02.2026**
(21) Application number: 24889164.0
(22) Date of filing: 08.11.2024
(51) Int. Cl.: B05C 5/02, B05C 11/02, B05D 1/26, H01M 4/04

(54) **SLOT DIE DEVICE AND METHOD FOR CONTROLLING HEIGHT OF SLOT DIE DEVICE**

(30) Priority: 10.11.2023 KR 20230155037
(71) Applicant: LG Energy Solution, Ltd., Seoul 07335 (KR)
(72) Inventor: CHOI, Min Woo, Daejeon 34122 (KR); KIM, Tae Yeon, Daejeon 34122 (KR); JEONG, Ha Yong, Daejeon 34122 (KR); CHO, Hyeon Hwak, Daejeon 34122 (KR); SEO, Bae Kang, Daejeon 34122 (KR); SON, Jae Huoung, Daejeon 34122 (KR)
(74) Representative: Plasseraud IP
(86) International application number: PCT/KR2024/017571
(87) International publication number: WO 2025/100978

(57) **Abstract**

The present disclosure relates to a slot die device that applies a coating liquid to an electrode sheet while being spaced apart by a predetermined interval from a roller supporting the electrode sheet, and to a height adjustment method of the slot die device. More specifically, the slot die device includes a slot die; a supporter configured to lift the slot die in up and down directions; and a height adjustment unit configured to enable additional adjustment of the height of the supporter, wherein the height adjustment unit includes a stopper extending upward; and a gap adjustment unit provided at the top of the stopper and configured to be liftable in up and down directions.

## Description

### [Technical Field]

The present disclosure relates to a slot die device and a height adjustment method thereof, and more particularly, to a slot die device capable of finely adjusting the height of a slot die that applies a coating liquid and a height adjustment method thereof.

This application claims the benefit of priority from Korean Patent Application No. 10-2023-0155037, filed on November 10, 2023, and all of the contents of the Korean Patent Application No. 10-2023-0155037are incorporated by reference into this disclosure.

### [Background]

To manufacture a secondary battery, first, an electrode active material slurry is applied to positive and negative current collectors to manufacture positive and negative electrodes, which are then stacked on both sides of a separator to form an electrode assembly of a predetermined shape. Then, the electrode assembly is accommodated in a battery case, electrolyte is injected, and the case is sealed.

Electrodes such as positive and negative electrodes are manufactured by applying a coating liquid, which is a mixture of electrode active material, binder, and plasticizer, to a sheet such as an electrode current collector. A slot die is generally used to apply such a coating liquid.

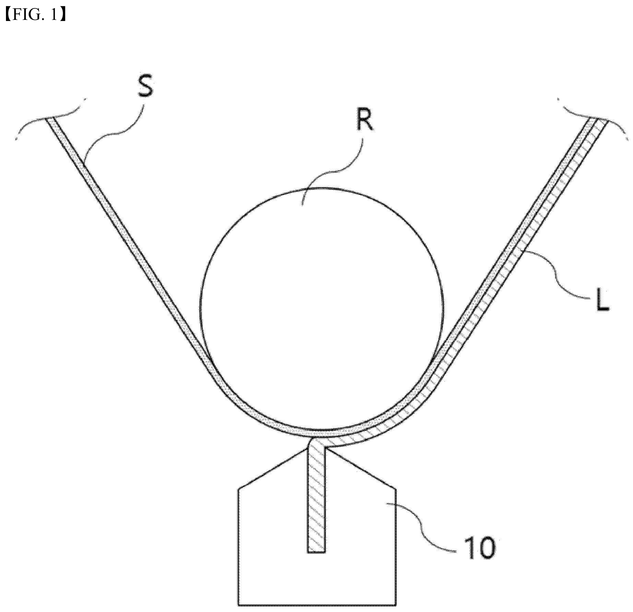

Fig. 1 is a schematic diagram illustrating the process of applying a coating liquid L using a conventional slot die 10.

As shown in Fig. 1, the slot die 10 applies the coating liquid L to an area of the sheet S supported by a roller R as the sheet S is transported in one direction. Therefore, during the process of applying the coating liquid L, the slot die 10 is generally positioned as close as possible to the roller R.

Meanwhile, to replace the sheet S, the gap between the sheet S and the roller R and slot die 10 must be widened. In this case, the slot die 10 is lowered to replace the sheet S. Also, after the sheet S replacement is completed, the slot die 10 is raised again to prepare for coating.

Conventionally, a pneumatic cylinder was used to raise and lower the slot die 10. However, it was difficult to finely adjust the height of the slot die 10 with the pneumatic cylinder, resulting in a lot of wasted time as the slot die 10 was raised and lowered more distance than necessary.

### [Related Art Document]

### [Patent Document]

Korean Patent Publication No. 10-2013-0128912

### [Summary]

### [Technical Problem]

Therefore, the present disclosure is directed to providing a slot die device capable of finely adjusting the height of a slot die, which has been invented to solve the above problems.

In addition, the present disclosure is directed to providing a method for finely adjusting the height of a slot die.

Other objects and advantages of the present disclosure may be understood from the following description and will become more apparent through embodiments of the present disclosure. In addition, it will be readily appreciated that the objects and advantages of the present disclosure may be realized by the means and combinations thereof as set forth in the appended claims.

### [Technical Solution]

According to the present disclosure, a slot die device is provided that applies a coating liquid to an electrode sheet while being spaced apart by a predetermined interval from a roller supporting the electrode sheet.

The slot die device includes a slot die; a supporter configured to lift the slot die in up and down directions; and a height adjustment unit configured to enable additional adjustment of the height of the supporter, wherein the height adjustment unit includes a stopper extending upward; and a gap adjustment unit provided at the top of the stopper and configured to be liftable in up and down directions.

The supporter may include a base plate supporting a lower portion of the slot die; a cylinder unit provided at a lower portion of the base plate and including a rod coupled to the base plate to perform linear motion; and a valve coupled to the cylinder unit to control movement of the rod.

The cylinder unit may further include a cylinder main body; a piston configured to be capable of linear reciprocating movement inside the cylinder main body; and a rod having both ends coupled to the piston and the base plate, respectively, to transmit power of the piston to the base plate.

The valve may be a solenoid valve capable of controlling the piston to stop in at least three different positions.

The height adjustment unit may be configured to be detachably mounted at the top of the cylinder main body.

The stopper may have a hardness of 90 or more and an impact strength of 4.0 kg·cm/cm or more.

The gap adjustment unit may include a lifting unit main body; a horizontal movement block including an upper inclined surface at its upper portion and configured to be capable of reciprocating movement in a horizontal direction inside the lifting unit main body; and a vertical movement block including a lower inclined surface corresponding to the upper inclined surface of the horizontal movement block and configured to be capable of reciprocating movement in up and down directions.

The vertical movement block may be fixed by a fixing member to restrict movement in the horizontal direction, and may vertically move guided by the fixing member in conjunction with movement of the horizontal movement block.

The vertical movement block may include a support part at its upper portion supporting the lower portion of the base plate.

The lifting unit main body may include a horizontal adjustment bar including a thread groove around its circumference, extending in the horizontal direction, penetrating the horizontal movement block, and screwed to the horizontal movement block; and a handle member coupled to an end of the horizontal adjustment bar.

According to the present disclosure, a method for adjusting the height of the slot die device of the present disclosure, which applies a coating liquid to an electrode sheet while being spaced apart by a predetermined interval from a roller supporting the electrode sheet, is provided.

The method is characterized by including a first step of adjusting the height of the supporter; a second step of supporting the supporter with the gap adjustment unit; and a third step of operating the gap adjustment unit to adjust the supporter to a specific height.

The supporter includes a base plate supporting a lower portion of the slot die; a cylinder unit provided at a lower portion of the base plate and including a rod coupled to the base plate to perform linear motion; and a valve coupled to the cylinder unit to control movement of the rod, and in the first step, the rod of the cylinder unit may be moved to lift the base plate and the slot die supported by the base plate.

In the second step, the bottom of the base plate may be supported by the stopper and the gap adjustment unit.

The gap adjustment unit includes an lifting unit main body; a horizontal movement block including an upper inclined surface at its upper portion and configured to be capable of reciprocating movement in a horizontal direction inside the lifting unit main body; and a vertical movement block including a lower inclined surface corresponding to the upper inclined surface of the horizontal movement block and configured to be capable of reciprocating movement in up and down directions, and in the third step, the vertical movement block may be moved to adjust the height of the base plate and the slot die positioned on the base plate.

### [Advantageous Effects]

According to the present disclosure, the movement time of the slot die can be reduced, thereby improving process efficiency.

In addition, the accuracy of the process can be improved by finely adjusting the height of the slot die.

### [Brief Description of the Drawings]

FIG. 1 is a schematic diagram illustrating a process for applying a coating liquid using a conventional slot die.
FIG. 2 is a perspective view of a slot die device of the present disclosure.
FIG. 3 is a perspective view of a cylinder unit of the present disclosure.
FIG. 4 is a schematic diagram illustrating a cylinder unit of the present disclosure and a valve coupled thereto.
FIG. 5 is a schematic diagram briefly illustrating an operation process of the cylinder unit of FIG. 4.
FIG. 6 is a perspective view of a stopper.
FIG. 7 is a perspective view of a cylinder unit of the present disclosure with the stopper of FIG. 6 applied.
FIG. 8 is a perspective view of a gap adjustment unit of the present disclosure.
FIG. 9 is a side view of the gap adjustment unit of FIG. 8.
FIG. 10 is a schematic diagram briefly illustrating an operation process of the gap adjustment unit of FIG. 9.
FIG. 11 is a perspective view of a slot die device according to a first embodiment of the present disclosure.
FIG. 12 is a diagram briefly illustrating a height adjustment process of a slot die device according to the first embodiment of the present disclosure.
FIG. 13 is a perspective view of a slot die device according to a second embodiment of the present disclosure.
FIG. 14 is a diagram briefly illustrating a height adjustment process of a slot die device according to a second embodiment of the present disclosure.

### [Detailed Description]

Hereinafter, preferred embodiments of the present disclosure will be described in detail with reference to the accompanying drawings. Before this, terms or words used in the specification and claims should not be interpreted as being limited to their conventional or dictionary meanings, and should be interpreted with meanings and concepts that correspond to the technical spirit of the present disclosure, based on the principle that an inventor can appropriately define the concepts of terms to explain the invention in the best way.

Therefore, the embodiments described in this specification and the configurations shown in the drawings are merely the most preferred embodiments of the present disclosure and do not represent all the technical spirit of the present disclosure. Thus, it should be understood that various equivalents and modifications capable of replacing them may exist at the time of filing this application.

In addition, detailed descriptions of known configurations or functions related to the present disclosure will be omitted when it is determined that they may obscure the gist of the present disclosure.

The embodiments of the present disclosure are provided to more completely explain the present disclosure to those skilled in the art, so the shapes and sizes of the components in the drawings may be exaggerated, omitted, or schematically illustrated for clearer explanation. Therefore, the size or ratio of each component does not fully reflect the actual size or ratio.

The present disclosure relates to a slot die device and a height adjustment method thereof, and more particularly, to a slot die device capable of finely adjusting the height of a slot die that applies a coating liquid and a height adjustment method thereof.

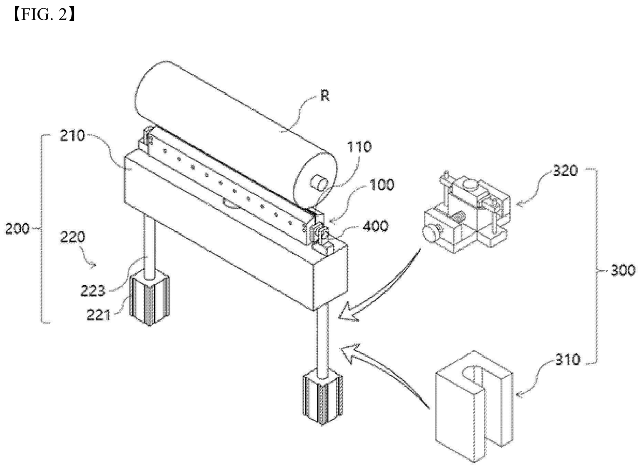

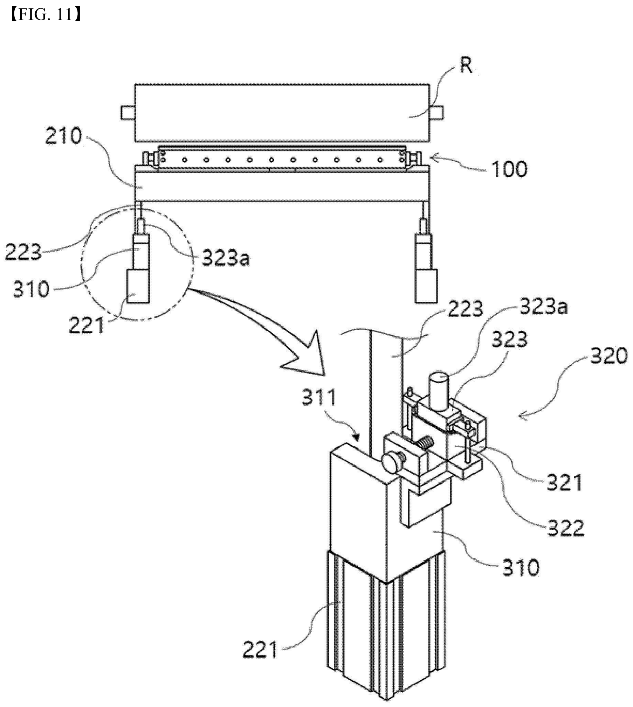

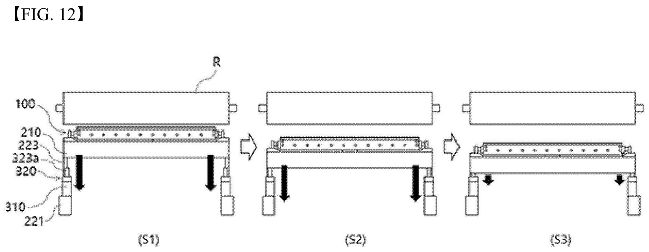

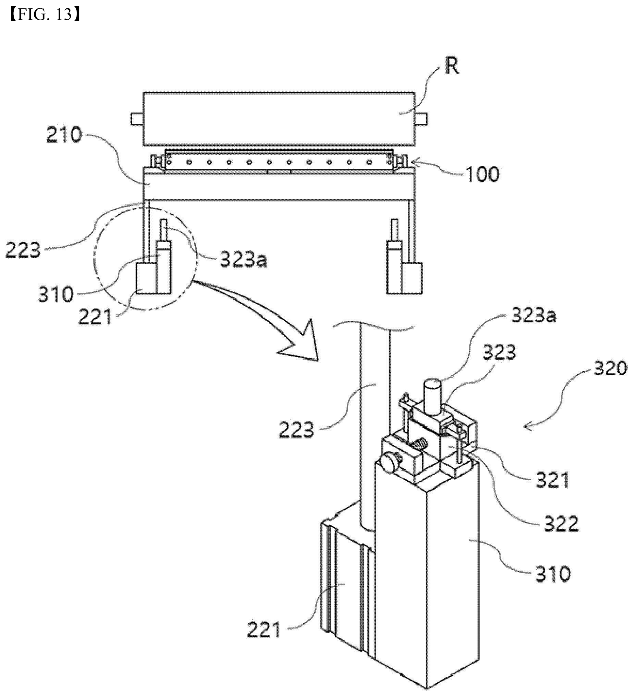

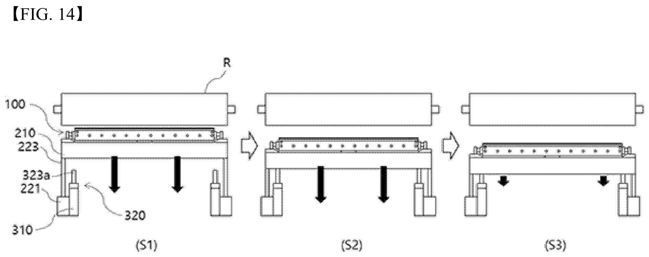

FIGS. 2 to 10 relate to a slot die device of the present disclosure, FIG. 11 relates to a slot die device according to a first embodiment of the present disclosure, FIG. 12 relates to a height adjustment method of a slot die device according to the first embodiment of the present disclosure, FIG. 13 relates to a slot die device according to a second embodiment of the present disclosure, and FIG. 14 relates to a height adjustment method of a slot die device according to the second embodiment of the present disclosure.

Hereinafter, specific embodiments of the slot die device and the height adjustment method thereof of the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

The slot die device of the present disclosure is used to apply a coating liquid to an electrode sheet while being spaced apart by a predetermined interval from a roller supporting the electrode sheet.

The electrode sheet includes a current collector composed of copper or zinc.

The coating liquid includes a slurry of a positive electrode active material, a binder resin, a conductive agent, and other additives.

FIG. 1 is a perspective view of a slot die device of the present disclosure.

The slot die device of the present disclosure includes a slot die 100, a supporter 200, and a height adjustment unit 300, as shown in FIG. 1.

The slot die 100 includes a die lip 110 forming a slit in the portion where the coating liquid L is sprayed.

The slot die 100 is positioned such that the die lip 110 is opposed to the roller R, as shown in FIG. 1, and is supported on the roller R to spray the coating liquid L on the electrode sheet S passing between the roller R and the slot die 100.

The supporter 200 is located on a lower portion of the slot die 100 and is configured to lift the slot die 100 in up and down directions.

Specifically, the supporter 200 includes a base plate 210 supporting the lower portion of the slot die 100, a cylinder unit 220 provided at the lower portion of the base plate 210 and coupled with the base plate 210 to include a rod 223 that moves in a linear motion, and a valve 230 coupled with the cylinder unit 220 to control the movement of the rod 223.

The slot die 100 is connected to the supporter 200 by die connectors 400 coupled on both sides. That is, the slot die 100 and the base plate 210 are connected by the die connector 400. At this time, the slot die 100 is coupled to the die connector 400 and is configured to be rotatable around the axis.

The base plate 210 is a part that directly supports the slot die 100, and is formed to extend along the length direction of the slot die 100 to fully support the entire lower portion of the slot die 100.

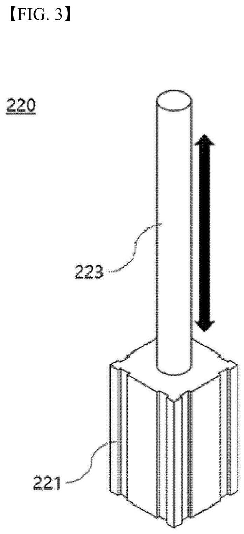

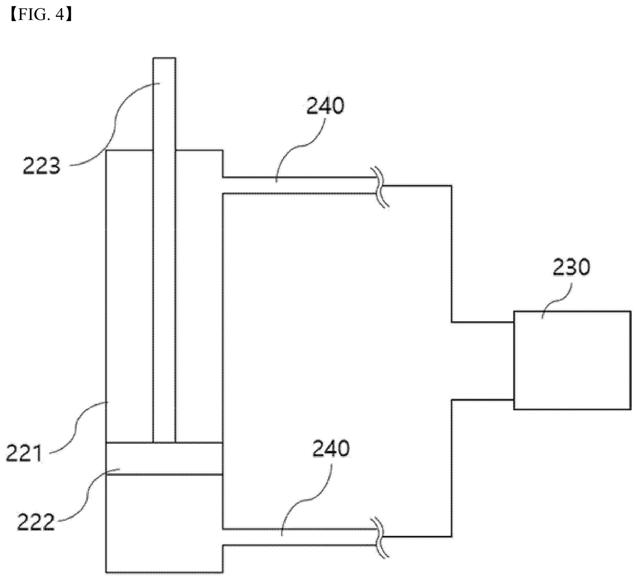

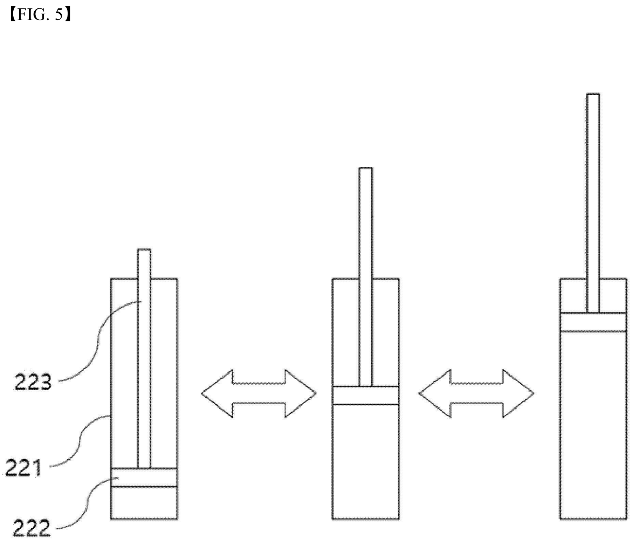

FIG. 3 is a perspective view of the cylinder unit 220 of the present disclosure, FIG. 4 is a schematic diagram briefly illustrating the cylinder unit 220 of the present disclosure and a valve 230 coupled thereto, and FIG. 5 is a schematic diagram briefly illustrating an operation process of the cylinder unit 220 of FIG. 4.

The cylinder unit 220 includes a cylinder main body 221, a piston 222, and a rod 223.

The cylinder main body 221 has its upper portion open so that the rod 223 can penetrate and move through it, and the rod 223 is inserted into the cylinder main body 221 through this open portion.

As shown in FIG. 4, the cylinder main body 221 includes an internal space where the piston 222 and rod 223 can reciprocate.

The piston 222 is configured to be capable of linear reciprocating movement in up and down directions inside the cylinder main body 221.

The rod 223, as shown in FIG. 2 and FIG. 5, has both ends coupled to the piston 222 and the base plate 210, respectively, to transmit power of the piston 222 to the base plate 210.

The piston 222 is moved by fluid pressure, and the fluid pressure is controlled by the valve 230.

According to FIG. 4, hydraulic lines 240 are coupled to one side of the cylinder main body 221, connecting to the upper space and lower space of the piston 222 separated by the piston 222, and each hydraulic line 240 is coupled to one valve 230.

The valve 230 controls the inflow and outflow of fluid through each hydraulic line 240.

When the valve 230 allows fluid to pass only through the hydraulic line 240 connected to the upper space of the piston 222, the piston 222 lowers. Accordingly, the rod 223, base plate 210, and slot die 100 also lower simultaneously.

Conversely, when the valve 230 allows fluid to pass only through the hydraulic line 240 connected to the lower space of the piston 222, the piston 222 rises. Accordingly, the rod 223, base plate 210, and slot die 100 also rise simultaneously.

The valve 230 is preferably a solenoid valve 230 that can control the piston 222 to stop in at least three different positions, as shown in FIG. 5.

That is, the valve 230 can allow fluid to pass through the pair of hydraulic lines 240 simultaneously, and block the flow of fluid through each hydraulic line 240 at a specific time to stop the piston 222 at a specific position. For example, the valve 230 can allow fluid to pass simultaneously to the upper space and lower space of the piston 222 and block the flow of fluid at the timing when the piston 222 stops at the middle position.

The height adjustment unit 300 is configured to enable additional adjustment of the height of the supporter 200. Specifically, the height adjustment unit 300 serves to additionally adjust the height of the base plate 210 included in the supporter 200.

The height adjustment unit 300 includes a stopper 310 and a gap adjustment unit 320.

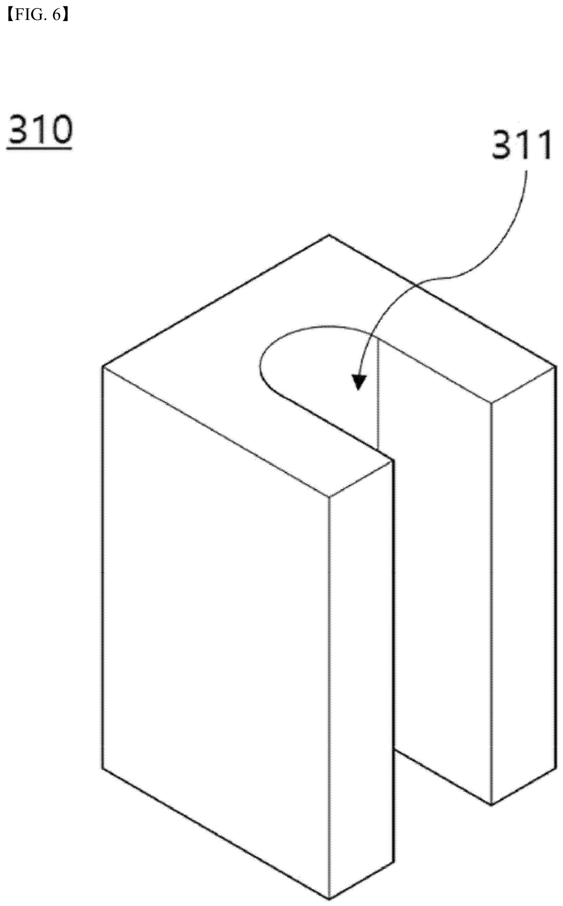

FIG. 6 is a perspective view of the stopper 310.

The stopper 310 has a shape extending upward, as shown in FIG. 6.

The stopper 310 serves to support the base plate 210 at a certain height when the height of the base plate 210 is adjusted by the cylinder unit 220.

Accordingly, depending on the height of the stopper 310, the base plate 210 and slot die 100 can be stopped at the height of the stopper 310.

The stopper 310 may include an insertion groove 311 in a side portion into which the rod 223 may be inserted.

The insertion groove 311 is formed to extend in the up and down directions, penetrating the upper portion and lower portion of the stopper 310.

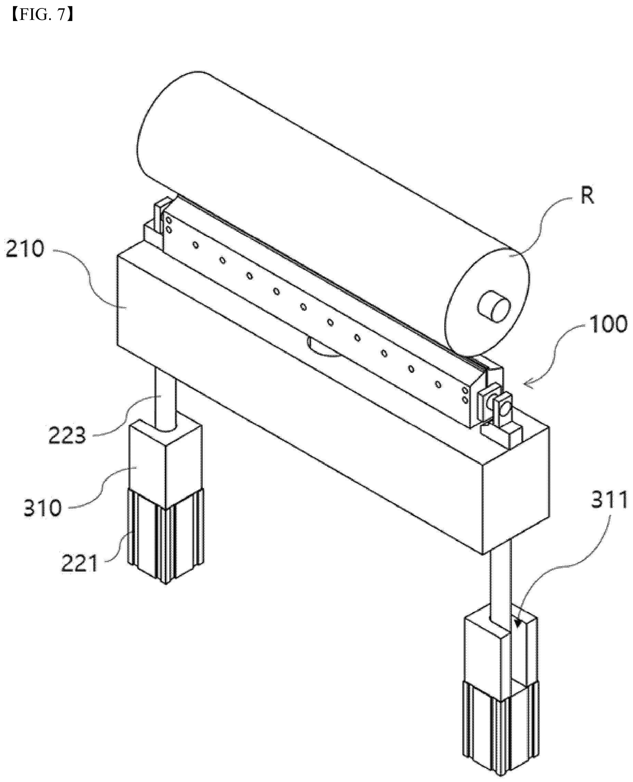

FIG. 7 is a perspective view of a cylinder unit 220 of the present disclosure with the stopper 310 of FIG. 6 applied.

The stopper 310 can be positioned at an upper portion of the cylinder main body 221 by having the rod 223 inserted into the insertion groove 311, as shown in FIG. 7.

The stopper 310 may be configured to be detachably mounted at the top of the cylinder main body 221. Alternatively, when the top height of the stopper 310 is at least higher than the top height of the cylinder main body 221, the stopper 310 may be separately installed at a side portion of the cylinder main body 221.

Accordingly, the base plate 210 is primarily adjusted in height by the rod 223 of the cylinder unit 220, and can be secondarily stopped at a specific height by the stopper 310.

The stopper 310 is preferably composed of a material that can fully withstand the weight of the base plate 210 and the slot die 100.

In other words, the stopper 310 preferably has a hardness of 90 or more and an impact strength of 4.0 kg·cm/cm or more. In this case, if the hardness and impact strength of the stopper 310 are below the above range, it may not fully withstand the weight of the slot die 100.

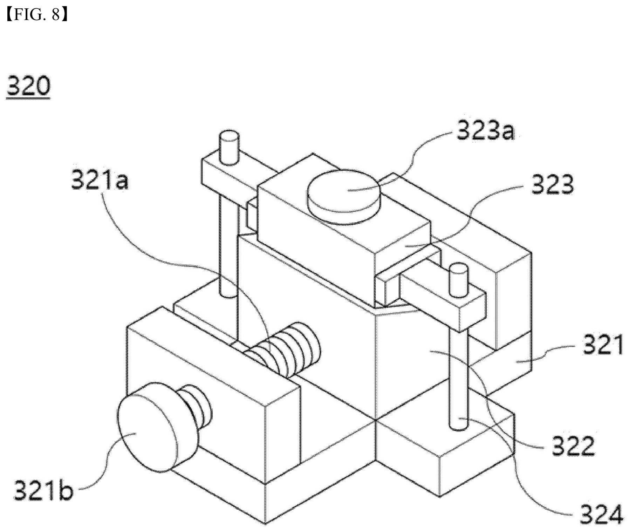

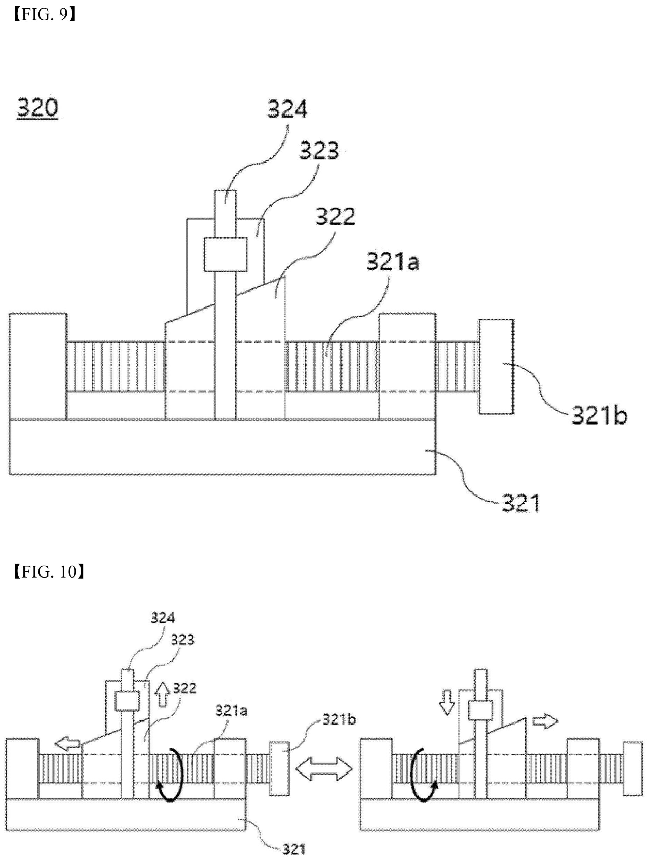

FIG. 8 is a perspective view of a gap adjustment unit 320 of the present disclosure, and FIG. 9 is a side view of the gap adjustment unit 320 of FIG. 8.

The gap adjustment unit 320 is provided at the top of the stopper 310 and is configured to be movable in up and down directions.

The gap adjustment unit 320 includes a lifting unit main body 321, a horizontal movement block 322, and a vertical movement block 323, as shown in FIGS. 8 and 9.

The lifting unit main body 321 is configured to be detachably mounted to the top of the stopper 310 and serves to support the horizontal movement block 322 and the vertical movement block 323.

The horizontal movement block 322 includes an inclined surface in its upper portion, and is configured to move in a horizontal direction inside the lifting unit main body 321.

The horizontal movement block 322 includes a horizontal adjustment bar 321a extending in the horizontal direction and coupled to the lifting unit main body 321, and a handle member 321b coupled to an end of the horizontal adjustment bar 321a. At this time, the handle member 321b is a part used when manually operating the horizontal adjustment bar 321a, and when the handle member 321b is rotated, the horizontal adjustment bar 321a simultaneously rotates in conjunction.

The horizontal adjustment bar 321a may have a thread groove formed around its circumference and penetrates the horizontal movement block 322. A thread groove that engages with the thread groove of the horizontal adjustment bar 321a may be formed on the inner wall of the hole portion where the horizontal adjustment bar 321a penetrates the horizontal movement block 322. Accordingly, the horizontal movement block 322 can be horizontally moved in the direction of the thread groove as the horizontal adjustment bar 321a rotates.

However, the connection structure between the horizontal movement block 322 and the horizontal adjustment bar 321a can be any structure that allows the horizontal movement block 322 to move linearly in conjunction with the rotation of the horizontal adjustment bar 321a, besides the thread groove.

The vertical movement block 323 includes a lower inclined surface corresponding to the upper inclined surface of the horizontal movement block 322 and is configured to be capable of reciprocating movement in up and down directions.

The vertical movement block 323 moves only in the vertical direction and includes a support part 323a at its upper portion that can support the base plate 210.

The support part 323a may protrude by a predetermined length from the upper portion of the vertical movement block 323 and supports the lower portion of the base plate 210 at its top.

The vertical movement block 323 is fixed by fixing members 324 on both sides so that movement in the horizontal direction is restricted.

The fixing member 324 is fixed to the lifting unit main body 321 to guide the vertical movement block 323 to move in up and down directions while simultaneously restricting the vertical movement block 323 from moving in the horizontal direction.

In other words, the vertical movement block 323 is fixed by the fixing member 324 to restrict movement in the horizontal direction, and vertically moves guided by the fixing member 324 in conjunction with movement of the horizontal movement block 322.

FIG. 10 is a schematic diagram briefly illustrating an operation process of the gap adjustment unit 320 of FIG. 9.

According to FIG. 10, as the horizontal adjustment bar 321a rotates in one direction, the horizontal movement block 322 moves in one direction. Specifically, the horizontal movement block 322 moves in a direction to push the vertical movement block 323 upward with its upper inclined surface.

Conversely, as the horizontal adjustment bar 321a rotates in the other direction, the horizontal movement block 322 moves in the other direction. Specifically, the horizontal movement block 322 moves in a direction to slide the vertical movement block 323 downward with its upper inclined surface.

### (first embodiment)

FIG. 11 is a perspective view of a slot die device according to a first embodiment of the present disclosure.

The slot die device has the stopper 310 positioned at the top of the cylinder main body 221 so that it surrounds the rod 223 with the insertion groove 311. In addition, the gap adjustment unit 320 is coupled to the top of the stopper 310.

The gap adjustment unit 320 is positioned higher than the top height of the stopper 310 coupled to the cylinder main body 221.

The gap adjustment unit 320 supports the lower portion of the base plate 210, which has its height primarily adjusted by the cylinder unit 220, with the support part 323a and additionally adjusts the height of the base plate 210.

It is preferable that while the gap adjustment unit 320 secondarily adjusts the height of the base plate 210, the piston 222 and rod 223 of the cylinder unit 220 do not transmit any physical force to the base plate 210 supported by the support part 323a.

FIG. 12 briefly illustrates a height adjustment process of the slot die device according to the first embodiment of the present disclosure.

The height adjustment method of the slot die device of the present disclosure includes a first step S1 of adjusting the height of the supporter 200, a second step S2 of supporting the supporter 200 with the gap adjustment unit 320, and a third step S3 of operating the gap adjustment unit 320 to adjust the supporter 200 to a specific height.

Referring to FIG. 12, in the first step S1 and the second step S2, by the lowering of the rod 223, the base plate 210 is lowered to a position where it is supported by the support part 323a of the gap adjustment unit 320 located at the top of the stopper 310.

In other words, in the first step S1, the rod 223 of the cylinder unit 220 is moved to lift the base plate 210 and the slot die 100 supported by the base plate 210. Subsequently, in the second step S2, the bottom of the base plate 210 is supported by the stopper 310 and the gap adjustment unit 320.

Thereafter, in the third step S3, the vertical movement block 323 of the gap adjustment unit 320 lowers while supporting the base plate 210 and the slot die 100 with the support part 323a, finely adjusting the height of the base plate 210 and the slot die 100.

Although not shown, the vertical movement block 323 of the gap adjustment unit 320 may conversely rise while supporting the base plate 210 and the slot die 100.

### (second embodiment)

FIG. 13 is a perspective view of a slot die device according to a second embodiment of the present disclosure.

The slot die device has the stopper 310 positioned adjacent to the cylinder main body 221. Also, the gap adjustment unit 320 is coupled to the top of the stopper 310.

Therefore, the gap adjustment unit 320 is positioned higher than the top height of the stopper 310.

The gap adjustment unit 320 supports the lower portion of the base plate 210, which has its height primarily adjusted by the cylinder unit 220, with the support part 323a and additionally adjusts the height of the base plate 210.

It is preferable that while the gap adjustment unit 320 secondarily adjusts the height of the base plate 210, the piston 222 and rod 223 of the cylinder unit 220 do not transmit any physical force to the base plate 210 supported by the support part 323a.

FIG. 14 is a diagram briefly illustrating a height adjustment process of the slot die device according to the second embodiment of the present disclosure.

The height adjustment method of the slot die device of the present disclosure includes a first step S1 of adjusting the height of the supporter 200, a second step S2 of supporting the supporter 200 with the gap adjustment unit 320, and a third step S3 of operating the gap adjustment unit 320 to adjust the supporter 200 to a specific height.

Referring to FIG. 14, in the first step S1 and the second step S2, by the lowering of the rod 223, the base plate 210 is lowered to a position where it is supported by the support part 323a of the gap adjustment unit 320 located at the top of the stopper 310.

In other words, in the first step S1, the rod 223 of the cylinder unit 220 is moved to lift the base plate 210 and the slot die 100 supported by the base plate 210. Subsequently, in the second step S2, the bottom of the base plate 210 is supported by the stopper 310 and the gap adjustment unit 320.

Thereafter, in the third step S3, the vertical movement block 323 of the gap adjustment unit 320 lowers while supporting the base plate 210 and the slot die 100 with the support part 323a, finely adjusting the height of the base plate 210 and the slot die 100.

Although not shown, the vertical movement block 323 of the gap adjustment unit 320 may conversely rise while supporting the base plate 210 and the slot die 100.

As aforementioned, the present disclosure has been described in more detail through the drawings, embodiments, and the like. However, since the configuration described in the drawings or embodiments, etc. described herein is merely one embodiment of the present disclosure and does not represent the overall technical spirit of the disclosure, it should be understood that there may be various equivalents, modifications, and substitutions capable of replacing these at the time of filing of this application.

### [Description of Reference Numerals]

### [Explanation of reference numeral]

10: (conventional art) slot die
100: slot die
110: die lip
200: supporter
210: base plate
220: cylinder unit
221: cylinder main body
222: piston
223: rod
230: valve
240: hydraulic line
300: height adjustment unit
310: stopper
311: insertion groove
320: gap adjustment unit
321: lifting unit main body
321a: horizontal adjustment bar
321b: handle member
322: horizontal movement block
323: vertical movement block
323a: support part
324: fixing member
400: die connector
S: (conventional art) (electrode) sheet
R: (conventional art) roller
L: (conventional art) coating liquid

## Claims

1. A slot die device that applies a coating liquid to an electrode sheet while being spaced apart by a predetermined interval from a roller supporting the electrode sheet, the slot die device comprising:
a slot die;
a supporter configured to lift the slot die in up and down directions; and
a height adjustment unit configured to enable additional adjustment of the height of the supporter,
wherein the height adjustment unit comprises:
a stopper extending upward; and
a gap adjustment unit provided at the top of the stopper and configured to be liftable in up and down directions.

2. The slot die device of claim 1, wherein the supporter comprises:
a base plate supporting a lower portion of the slot die;
a cylinder unit provided at a lower portion of the base plate and comprising a rod coupled to the base plate to perform linear motion; and
a valve coupled to the cylinder unit to control movement of the rod.

3. The slot die device of claim 2, wherein the cylinder unit further comprises:
a cylinder main body;
a piston configured to be capable of linear reciprocating movement inside the cylinder main body; and
a rod having both ends coupled to the piston and the base plate, respectively, to transmit power of the piston to the base plate.

4. The slot die device of claim 2, wherein the valve is a solenoid valve capable of controlling the piston to stop in at least three different positions.

5. The slot die device of claim 3, wherein the height adjustment unit is configured to be detachably mounted at the top of the cylinder main body.

6. The slot die device of claim 1, wherein the stopper has a hardness of 90 or more and an impact strength of 4.0 kg·cm/cm or more.

7. The slot die device of claim 2, wherein the gap adjustment unit comprises:
a lifting unit main body;
a horizontal movement block comprising an upper inclined surface at its upper portion and configured to be capable of reciprocating movement in a horizontal direction inside the lifting unit main body; and
a vertical movement block comprising a lower inclined surface corresponding to the upper inclined surface of the horizontal movement block and configured to be capable of reciprocating movement in up and down directions.

8. The slot die device of claim 7, wherein the vertical movement block is fixed by a fixing member to restrict movement in the horizontal direction, and may vertically move guided by the fixing member in conjunction with movement of the horizontal movement block.

9. The slot die device of claim 7, wherein the vertical movement block comprises a support part at its upper portion supporting the lower portion of the base plate.

10. The slot die device of claim 7, wherein the lifting unit main body comprises:
a horizontal adjustment bar comprising a thread groove around its circumference, extending in the horizontal direction, penetrating the horizontal movement block, and screwed to the horizontal movement block; and
a handle member coupled to an end of the horizontal adjustment bar.

11. A method for adjusting the height of the slot die device of claim 1, which applies a coating liquid to an electrode sheet while being spaced apart by a predetermined interval from a roller supporting the electrode sheet, the method comprising:
a first step of adjusting the height of the supporter;
a second step of supporting the supporter with the gap adjustment unit; and
a third step of operating the gap adjustment unit to adjust the supporter to a specific height.

12. The method of claim 11, wherein the supporter comprises:
a base plate supporting a lower portion of the slot die;
a cylinder unit provided at a lower portion of the base plate and comprising a rod coupled to the base plate to perform linear motion; and
a valve coupled to the cylinder unit to control movement of the rod,
wherein in the first step, the rod of the cylinder unit is moved to lift the base plate and the slot die supported by the base plate.

13. The method of claim 12, wherein in the second step, a bottom of the base plate is supported by the stopper and the gap adjustment unit.

14. The method of claim 12, wherein the gap adjustment unit comprises:
a lifting unit main body;
a horizontal movement block comprising an upper inclined surface at its upper portion and configured to be capable of reciprocating movement in a horizontal direction inside the lifting unit main body; and
a vertical movement block comprising a lower inclined surface corresponding to the upper inclined surface of the horizontal movement block and configured to be capable of reciprocating movement in up and down directions,
wherein in the third step, the vertical movement block is moved to adjust the height of the base plate and the slot die positioned on the base plate.
